Europäisches Patentamt

European Patent Office

Office européen des brevets

(11) Publication number: **0 412 225 A1**

# EUROPEAN PATENT APPLICATION

(21) Application number: 89810603.4

(22) Date of filing: 11.08.89

(51) Int. Cl.5: **G01N 1/00**, B01L 3/02

(43) Date of publication of application:
**13.02.91 Bulletin 91/07**

(84) Designated Contracting States:
**CH ES FR IT LI**

(71) Applicant: **Noebels, Henry J.**
**19, Rue de la Prairie**
**CH-1202 Genève(CH)**

(72) Inventor: **Noebels, Henry J.**
**19, Rue de la Prairie**
**CH-1202 Genève(CH)**

(74) Representative: **Feldmann, Clarence Paul et al**
**c/o Patentanwaltsbüro FELDMANN AG**
**Postfach Kanalstrasse 17**
**CH-8152 Glattbrugg(CH)**

(54) A device for measuring by displacement, an exact micro dose of a fluid to be analysed from a totally filled capillary tube closed at one end and flushing such dose into a cuvette by means of an exactly measured dose of a reagent fluid.

(57) The device for measuring an exact micro dose of a fluid to be analysed comprises a tubular chamber (2) which is equipped with an entrance opening (71) provided with an annular seal (22) through which a capillary tube (C) can be introduced. From the bottom (4) a calibrated needle (41) projects centrally into the tubular chamber. When a capillary tube completely filled with the fluid to be analysed is pushed into the chamber until it reaches the bottom, the calibrated needle will then displace the exact dose equivalent to its volume from the capillary tube. Now the chamber can be flushed through connector (8) with reagent and the mixture then exits the chamber through connector (9). To be certain of a constant volume and proportional ratio of sample to reagent, the reagent is introduced into the chamber by means of a proportioning dispenser coupled to the connector (8).

FIG.1

# A DEVICE FOR MEASURING BY DISPLACEMENT, AN EXACT MICRO DOSE OF A FLUID TO BE ANALYSED FROM A TOTALLY FILLED CAPILLARY TUBE CLOSED AT ONE END AND FLUSHING SUCH DOSE INTO A CUVETTE BY MEANS OF AN EXACTLY MEASURED DOSE OF A REAGENT FLUID.

The present invention concerns a device for measuring by displacement, an exact micro volume or dose of a sample fluid to be analysed from a totally filled capillary tube closed at one end and flushing such dose into a cuvette by means of an exactly measured volume or dose of a reagent fluid, that is to react chemically with the sample fluid.

In the medical field, when an analysis is to be made from a micro dose of a sample fluid that is to be mixed and reacted with a reagent fluid, this process is done in two separate steps. The first step is to measure a microliter volume of the sample fluid to be analysed and in the second step this microliter volume is mixed and reacted with an accurately measured volume of reagent fluid.

The conventional method of measuring a microliter volume of fluid sample is to use a syringe or a micropipette. Known is also as a so called "automatic micropipette" which normally utilizes a replaceable plastic tip, that is supposed to be discarded after each measurement. Another known method of measuring microliter volumes is based on the utilization of a calibrated capillary tube. The filled capillary tube is then immersed in the reagent and the whole shaken. To allow the sample to gradually diffuse into the liquid reagent. This method is subject to error if not shaken sufficiently to allow complete diffusion of the sample. In some instances a rubber or elastomer bulb is attached to the capillary to displace the sample. Still another method using capillaries for volume measurement is employing a "Swizzle Stick" as described by Rideout, Renshaw and Snook in ANALYTICAL BIOCHEMISTRY 90,744-751 (1978). Their device teaches the use of a calibrated rod to displace its volume of sample liquid from a capillary. However in this instance, the rod and its holder are then immersed in the reagent tube and rotated (swizzled) in one direction then in the reverse direction to mix the dis placed sample with the reagent. This method can be subject to errors due variations of agitation in the manipulation of the capillary when immersed in the reagent.

The object of present invention is to create a device which allows the measurement of an exact micro dose of the fluid to be analysed and flushing such dose with an exactly measured dose of a reagent fluid into the reaction tube in one step, in a manner that does not involve subjective judgement of agitation or measurement conditions.

This object is attained by a device as claimed in claim 1. The work with the device of the invention is so simple that it can be operated by relatively untrained operators. Since the quantity of fluid necessary for analysis, for example blood, is so small, it can be taken from a drop of blood obtained by fingerpuncture. No drawing of venous blood by a syringe is necessary. This allows for the first time the creation of portable laboratory unit in which the device of the invention is incorporated, as claimed in the claims 3 and 4. Such a portable laboratory unit allows the examination of a single or a multitude of patients in field screening tests. For example patients can be screened for cardio-vascular risk factors by simply taking a finger-tip drop of blood at their home, work site or a community or similar assembly location and immediately analyzed.

The attached drawing shows a preferred embodiment of the present invention, wherin

Fig 1 is a cross sectional view of a tubular chamber in enlarged scale and

Fig 2 is a side view of the complete device with the tubular chamber in operating position.

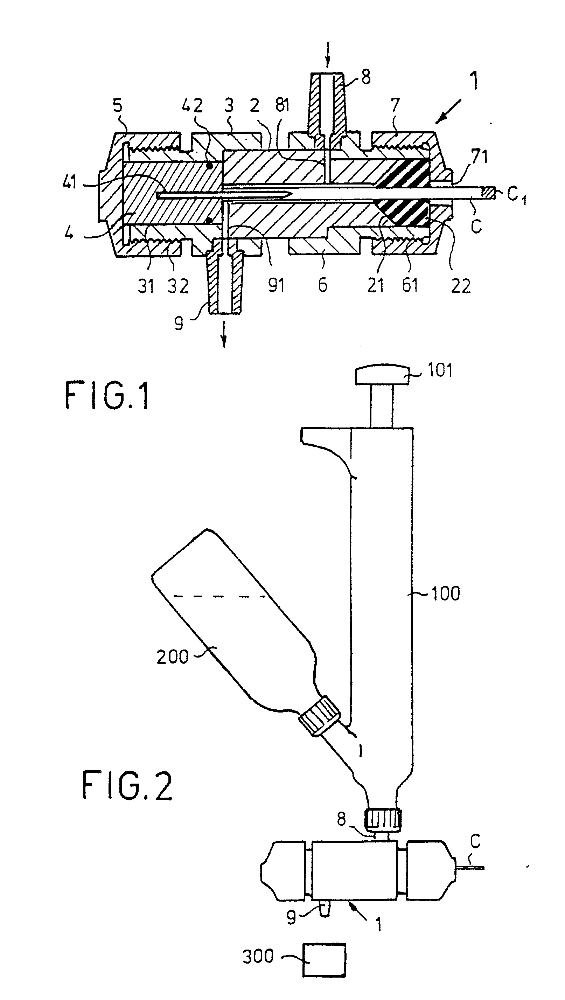

The tubular chamber generally indicated by 1 and shown in Fig 1 comprises a central tubular body 2 having a central hole which is slightly greater than the capillary tube to be introduced in the chamber.

The right end of this body being is smaller in diameter than the left end. The right end has a conical recess 21 which merges into the central hole. Both ends of the central body are provided with tightly fitting sleeves. The left hand sleeve 3 has a cylindrical hole 31 and is threaded on its outer end at 32 The cylindrical hole 31 accomodates a cylindrical needle holder 4 which supports a calibrated displacer-needle 41. The needle holder with the displacer needle can be slid into the hole 31. An annular groove in the body of the needle holder 4 contains an elastomer O-ring 42 which guarantees for a tight seal. A screw cap 5 presses the needle holder upon the end of the tubular body 2 and forms the bottom of the chamber. The right hand sleeve 6 is also threaded at its outer end at 61. A screw cap 7 having a central hole 71 compressing a sealing ring 22 in the conical recess 21. This sealing ring has a cylindrical part which merges in a conical part. The sealing ring consists of natural or synthetic rubber and is provided with a central hole. The diameter of this hole is dimensioned to be slightly greater than the capillary so that it forms a sliding fit for said capillary tube C. Both sleeves 3 and 6 are provided with a connector leading to the central hole of the tubular body 2.

Connector 8 is fastened in the sleeve 6 and placed in the upper region of the chamber. A radial hole 81 in the central body 2 forms a channel leading into the chamber. Connector 9 is fastened in the sleeve 3 and a hole or groove 91 in alignment with the hole of the connector forms a channel to the bottom of the chamber.

Figure 1 shows the tubular chamber with a capillary tube C which has been introduced in the chamber. To introduce such fragile tube into the chamber some care must be taken. For this reason the chamber is held in a position turned 90° from the position shown in Figure 1, so that cap 7 forms the top and cap 5 the bottom of the chamber. The capillary tube C is closed at its outer end at Cl.

Figure 2 shows the device in operating position. It comprises the tubular chamber 1 as shown and described in Figure 1.

A proportioning dispenser 100 is connected by help of a cap screw to connector 8. The lower end of the proportioning dispenser is coupled with a reagent container 200 containing the reagent to be used. The upper end of the proportioning dispenser shows an actuating knob 101 for actuating a plunger. At each full depression of the actuating knob the dispenser delivers an exactly measured volume of reagent through connector 8 into the chamber. In Figure 2 when the capillary tube C completely filled with the fluid to be analysed is introduced into the tubular chamber to its full extent, the displacer-needle 41 displaces its calibrated volume of fluid from the capillary tube into the chamber. When the knob 101 of the proportioning dispenser is depressed the calibrated volume of the fluid to be analysed will be flushed out of the chamber by the reagent and leaving the chamber through connector 9 to be flushed into a cuvette 300.

Since the volume of the reagent delivered by the proportioning dispenser is of a magnitude at least ten times the volume of the fluid to be analysed, a good mixing of both fluids will be attained and the displaced sample fluid will be completely washed out into the cuvette. Since proportioning dispensers are well known in the art it is not necessary to describe this dispenser in detail. The device and the dispenser are small and can be combined with other apparatuses and parts to make a self contained portable laboratory unit. The additional apparatuses and parts, necessary for a self contained laboratory unit for making blood tests are, plastic putty for closing one end of a capillary tube, a selection of capillary tubes, a constant temperature heating block, a set of cuvettes, a bottle of reagent fluid and a programmable electronic colorimeter or other device to measure the extend of color absorbtion or other physical property of the reacted sample. Of course an electric power source must be available to actuate the centrifuge, the colorimeter and to heat the heating block.

When using the laboratory unit for blood tests the operations to be performed are as follows:

a capillary tube open at both ends is used for taking up a sample. It fills itself completely by capillary action when touched to a drop of blood. After that one end of the filled capillary is closed by a plug of putty, it is then put in the centrifuge and centrifuged to separate the red blood cells from the plasma. Then a small section of the capillary, a few millimeter from the plasma end of the tube is snapped off, leaving the plasma surface exactly even with the end of the capillary tube. The glass capillary tube may be pre-scored to facilitate a clean and even break.

Now the capillary can be carfully introduced through the opening 71 into the chamber. One should be sure to push the capillary in until it reaches the bottom of the chamber, because only then will the calibrated needle 41 push out the exact micro volume of sample. The chamber is then connected to the proportioning dispenser and flushed with the reagent so that the mixture leaves the chamber through connector 9 and is then received in a cuvette. After that the cuvette is placed into the heating block to react chemically.

Care should be taken, that all operations are done at 37°C. Also the reagent should maintained at that temperature. For this reason a heating block is necessary both to temperature equilibrate the reagent fluid and the empty cuvettes and to allow the sample plus reagent mixture to react completely within the required time intervall.

It is self evident, that the device with the tubular chamber 1 can be used for other analytical purposes for fluids and not only for blood tests. It is universally applicable and its special advantage over other test methods is, that only a very small quantity of sample and reagent in the region of microliters are necessary for the analysis.

**Claims**

1. A device for measuring by displacement an exact micro dose of a fluid to be analyzed from a totally filled uncalibrated, capillary tube closed at one end and flushing such dose into a cuvette by means of an exactly measured dose of a reagent fluid, such device being characterized by tubular chamber (2) having an inner diameter which is slightly greater than the capillary (C) to be introduced into the chamber, the top of said chamber being equipped with an entrance opening (71) with a seal (22) allowing the capillary tube (C) to be introduced in the chamber, the bottom (4) of said chamber being provided with a displacer-needle (41) of calibrated volume which is in alignment with said entrance opening, the diameter of said needle being smaller than the internal diameter of the capillary tube, said chamber being provided at its upper region with a connector (8), to which a proportioning dispenser (100) with its reagent container (200) is coupled and being provided with an outlet opening (9) positioned in the region of the bottom of said chamber.

2. A device as claimed in claim 1., characterized by a replaceable displacer-needle holder (4) equipped with a needle (41) calibrated to displace an exact chosen volume from a capillary tube, in the range of one to fifty microliters the proportioning dispenser delivering exact chosen volumes in the range of one hundred to two thousand microliters of fluid.

3. A device as claimed in claim 2., characterized in that the needle (41) is provided with a non wettable coating.

4. A self contained laboratory unit for the analysis of blood and body fluid samples, comprising a device as claimed in claim 1. The unit being characterized in comprising in an eletrically heated container, a tray of plastic putty for closing one end of a capillary tube, a selection of capillary tubes, a centrifuge for centrifuging capillary tubes, a set of cuvettes, a constant temperature heating block for incubating the reaction mixture at a specific temperature usually 37° centigrade, at least one bottle of reagent fluid and a programmable electronic colorimeter or other device to measure the extent of color absorption of the reacted sample or other change in physical property to allow the concentration of the desired analyte to be determined.

5. A self contained laboratory unit as claimed in claim 4., characterized in that it is made to be easily portable so as to allow immediate blood and body fluid tests to be made at the patient or the sampling site using very small samples in the microliter range.

6. A self contained laboratory unit as claimed in claim 3 characterised in that it is made to be easily portable so as to allow immediate tests on a fluid from which only a small sample in the microliter range is available.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 339 852 (A. RENSHAW) * Figure 1; page 1, line 30 - page 2, line 5; page 4, lines 4-37; page 5, line 15 - page 6, line 3 * | 1-3 | G 01 N 1/00 B 01 L 3/02 |
| A | FR-A-1 440 829 (CENTRE NATIONAL DE LA RECHERCHE SCIENTIFIQUE) * Figure 1; abstract * | 1 | |
| A | GB-A-2 009 402 (A. RENSHAW) * Figure 2; page 2, lines 71-83; page 3, lines 36-32 * | 1,2 | |

TECHNICAL FIELDS
SEARCHED (Int. Cl.5)

G 01 N
B 01 L

The present search report has been drawn up for all claims

| Place of search | Date of completion of the search | Examiner |
|---|---|---|
| THE HAGUE | 03-04-1990 | HOCQUET A.P.E. |